# EUROPEAN PATENT APPLICATION

(11) **EP 2 866 007 A2**
(43) Date of publication of application: **29.04.2015**
(21) Application number: 14189751.2
(22) Date of filing: 21.10.2014
(51) Int. Cl.: G01J 3/28, G01J 3/36

(54) **Row by row adjustable focal plane array for hyperspectral imagers**

(30) Priority: 22.10.2013 US 201361894115 P; 28.02.2014 US 201414194332
(71) Applicant: Goodrich Corporation, Charlotte, NC 28217-4578 (US)
(72) Inventor: Rappoport, William, Weston, CT 06883 (US)
(74) Representative: Hughes, Andrea Michelle

(57) **Abstract**

An imaging device and method of imaging an object 110 is disclosed. The device includes a two-dimensional focal plane 120 including a plurality of rows of pixels. The pixel is configured to measure an intensity of light directed onto the pixel using a gain parameter. A gain adjuster 420, 430 adjusts the gain parameter for a selected row of pixels of the focal plane array independently of a gain parameter of another row of pixels.

## Description

### BACKGROUND

The present invention relates to focal plane array imaging technology, and in particular, to a method and apparatus for selectively adjusting gain for individual rows of a focal plane array. A focal plane array designed in this way has advantages for use in hyperspectral imaging instruments.

A hyperspectral imager is a device that creates an array of images of an object or scene. Each of the individual images represents the optical energy from the object or scene in different wavelength intervals. In operation, light from the object or scene is focused onto a slit. Light passing through the slit is dispersed and refocused onto a focal plane array, such that one wavelength of light is directed onto one row of pixels of the focal plane array and another wavelength of light is directed onto another row of pixels. Due to the nature of sunlight or of infra-red thermal emissions from an object, which are typically the source light for the object or scene being imaged, the intensity of light varies greatly with wavelength. This variation of light intensities may result in one row of pixels of the focal plane array being saturated with light while another row of pixels experiences problems related to very low light levels, such as a low signal-to-noise ratio.

### SUMMARY

In one aspect, a method of imaging an object includes: projecting dispersed light from the object or scene onto a two-dimensional focal plane array having a plurality of rows of pixels; adjusting a gain parameter of a selected row of pixels independently of the gain parameter of another row of pixels; and obtaining a measurement of light directed onto a pixel in the selected row of pixels using the adjusted gain parameter.

In another aspect, an imaging device includes: a two-dimensional focal plane including a plurality of rows of pixels, wherein a pixel is configured to measure an intensity of light directed onto the pixel using a gain parameter; and a gain adjuster configured to adjust a gain parameter for a selected row of pixels of the focal plane array independently of a gain parameter of another row of pixels.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE SEVERAL VIEWS OF THE DRAWINGS

The subject matter which is regarded as the invention is particularly pointed out and distinctly claimed in the claims at the conclusion of the specification. The forgoing and other features, and advantages of the invention are apparent from the following detailed description taken in conjunction with the accompanying drawings in which:
Figure 1 shows an illustrative hyperspectral imager including a focal plane array operable according to the methods disclosed herein;
Figure 2 shows radiation spectra over for unfiltered sunlight and for sunlight after passing through the earth's atmosphere;
Figure 3 shows illustrative circuitry for a pixel of the focal plane array of Figure 1, in one embodiment;
Figure 4 shows an illustrative circuit for a focal plane array suitable for gain adjustment related to charge capacitance of a selected pixel;
Figure 5 shows an illustrative circuit for a focal plane array suitable for gain adjustment related to integration time of a selected pixel; and
Figure 6 shows an illustrative timing diagram that may be used with respect to the circuit of Figure 5.

### DETAILED DESCRIPTION

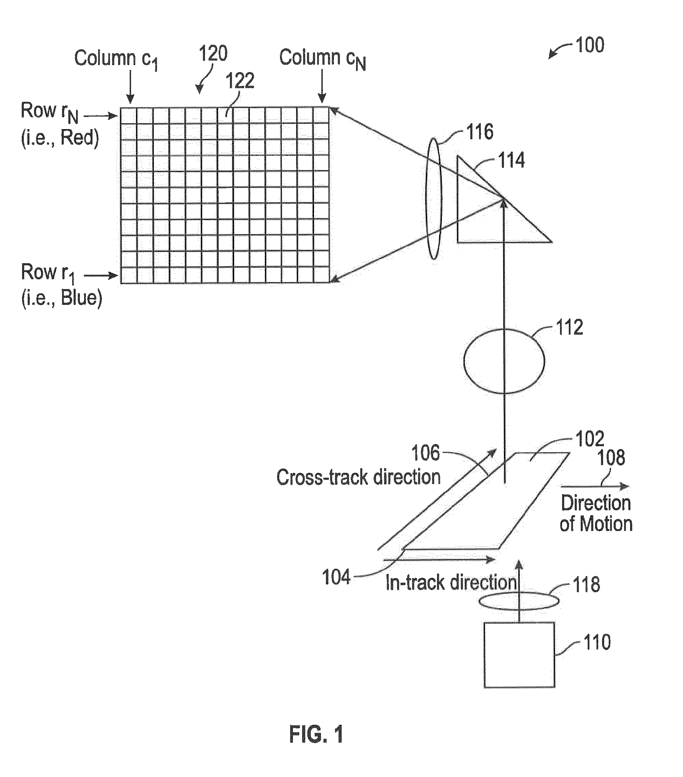

Figure 1 shows an illustrative hyperspectral imager 100 including a focal plane array 120 operable according to the methods disclosed herein. A hyper-spectral imager 100 is an instrument designed to create an array of images of an object or scene 110. Each image may represent the object or scene 110 at different wavelengths, allowing an operator to extract spectral information from the image.

The hyperspectral imager 100 is generally conveyed in an aircraft or space vehicle. An optical lens 118 or telescope focuses optical energy from the object or scene 110 onto a slit 102. The slit 102 is generally rectangular in shape and includes a short dimension known as the in-track direction 104 and a long dimension known as the cross-track direction 106. The slit 102 is generally oriented so that the direction of motion 108 is parallel to the in-track direction 104 and perpendicular to the cross-track direction 106. The light passing through the slit 102 passes through various optical elements 112 and dispersing element 114 which may be a prism or grating in various embodiments. The dispersed light is refocused onto the focal plane array 120, generally via a lens 116. The focal plane 120 array contains a two-dimension matrix of pixels. A pixel may include a photodiode or photoconductor which converts the optical energy into an electrical current, and a unit cell amplifier for integrating the current and converting the resulting electrical charge into a voltage proportional to the intensity of light being directed onto the pixel. The duration of time during which charge is integrated is known as the integration time. A maximum integration time, known as the frame time, is generally set to be the time for a point in the scene to cross the short dimension of the slit due to the motion of the aircraft or spacecraft. During one frame time, the object or image 110 captured is one pixel high and has a width equal to the number of columns in the focal plane array 120. Subsequent frames allow a two dimensional image to be compiled.

In general, each pixel of the focal plane array 120 (such as illustrative pixel 122) belongs to both a column of pixels (i.e., one of columns c₁-c_{N}) and a row of pixels (i.e., one of rows r₁-r_{N}). Because of the light passing through the dispersing element 114, a selected row of pixels receives light in a narrow band of optical wavelengths. Thus, light of one wavelength is directed onto a row r₁ while light of another wavelength is directed onto row r₂, and so forth up to row r_{N}. For example, row r₁ may receive blue light while row r_{N} receives red light. An individual row of pixels provides an image of a narrow rectangle on the ground within a narrow band of optical wavelengths. On the other hand, a column of pixels, such as any of columns c₁-c_{N}, represent the image of a same spot of the object or scene 110 at different optical wavelengths.

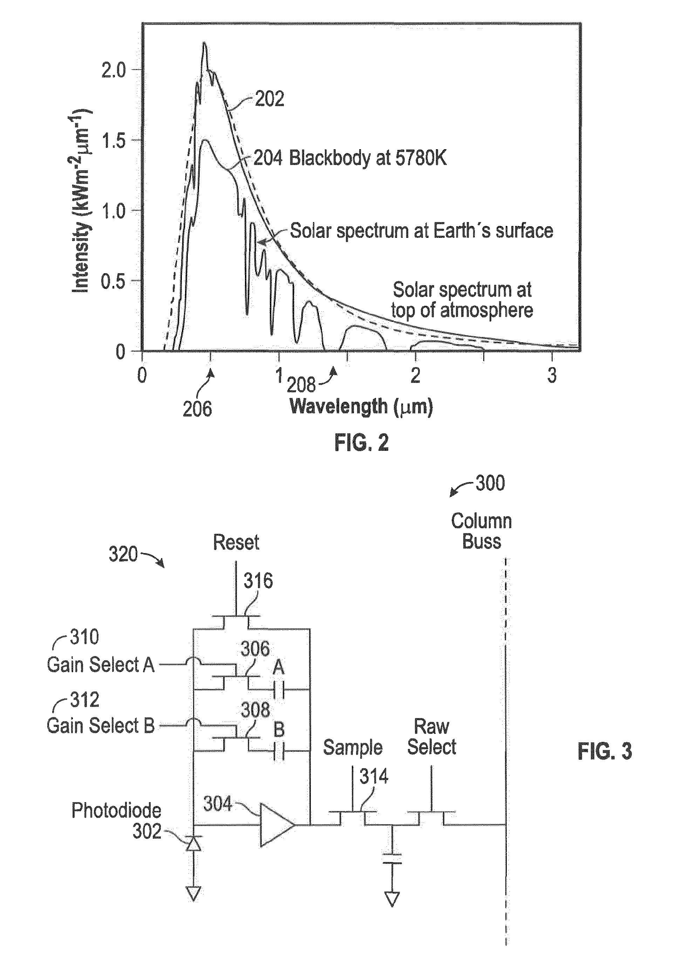

Since each pixel 122 receives light within a narrow optical band of wavelengths, the intensity of light received at a selected pixel of the focal plane array 120 depends on the optical radiation spectrum of the object or scene 110. The radiation of the light source illuminating the object or scene 110 is related to the sun's radiation spectrum and the absorption spectrum of the atmosphere. Alternatively, for an infrared sensor, the radiation of the light source is related to a thermal emission spectrum of the object or scene 110 and the absorption spectrum of the atmosphere. Figure 2 shows radiation spectra 200 for unfiltered sunlight and for sunlight after passing through the earth's atmosphere. An infrared spectrum (not shown) shows similar features. The sun is a blackbody radiator and has a known blackbody radiation spectrum 202 which varies strongly with wavelength. The atmosphere is known to absorb at certain wavelengths more strongly that at other wavelengths. Thus, the atmospheric radiation spectrum 204 after light is absorbed by the atmosphere has non-uniform optical illumination levels over the optical wavelengths or optical bands of the spectrum. For example, light intensity at or near 0.55 micrometers (206) near the peak of the solar spectrum is much higher that light intensity at or near 1.4 µm (208). This non-uniformity of intensity over optical wavelengths may cause certain rows of the focal plane array 120 to receive more light than other rows. A row receiving low light intensity may have problems related to signal-to-noise ratios while a row receiving high light intensity may be operating at or near saturation levels. The disclosed invention therefore provides a method of adjusting a gain of a selected row (i.e., pixels receiving light at a same selected wavelength), so that the gain of the selected row may be adjusted independently of the gain of other rows of the focal plane array 120. Generally, an approximate range of light intensity of a scene is known, allowing adjustments to be made prior to acquiring an image.

Figure 3 shows illustrative circuitry for a pixel 300 of the focal plane array 120 of Figure 1, in one embodiment. In general, light is directed onto a photodiode 302 of the pixel 300 which produces an electrical signal, such as a current, that is collected during an integration time and converted to a voltage. At the conclusion of a frame time, a sampling device 314 samples and holds the resulting voltage to obtain a measurement of the light intensity. The voltage that is read by the sampling device 314 may be affected by at least two gain parameters of the pixel 300. One gain parameter is related to an amount of charge that can be stored from the photodiode 302 before the amplifier saturates. Another gain parameter is related to an integration time interval over which the sampling device 314 counts or integrates the charge from the photodiode 302. One or more of these gain parameters may be adjusted together or independently, in various embodiments.

At the beginning of an imaging time period, the photodiode 302 receives light that is directed onto it and produces a current having a magnitude that is proportional to an intensity of the light hitting the photodiode 302. The current is introduced into an integration circuit 320 that includes operational amplifier 304 in a loop that includes integration capacitors A and B. Capacitor A is generally in parallel with Capacitor B. It should be noted that two capacitors are discussed for illustrative purposes only, and additional capacitors may be added in parallel with capacitors A and B in alternate embodiments. Switch 306 is in series with Capacitor A and is controlled by Gain Select A (310). Similarly, switch 308 is in series with Capacitor B and is controlled by Gain Select B (312). Gain Select A (310) provides a digital signal that may be used at switch 306 to move Capacitor A into or out of the integration circuit 320. In general, Gain Select A (310) provides a digital bit, such as a '1' bit to switch Capacitor A into the integration circuit 320 and provides another digital bit, such as '0' bit, to switch Capacitor A out of the integration circuit 320. Gain Select B (312) similarly provides digital bits to switch 308 to switch Capacitor B into or out of the integration circuit 320. Thus, Capacitors A and B may be switched into and out of the integration circuit 320 independently of each other. Switching the capacitors A and B into and out of the integration circuit 320 affects the total capacitance of the integration circuit 320. When a relatively low total capacitance is selected, the pixel 300 will have a relatively high gain and a relatively low saturation level. When the total capacitance is increased to relatively high level by adding capacitors in parallel at the integrator circuit, the gain is reduced while the saturation level for the pixel 300 increases.

At the end of a selected integration time period, a sampling device 314 discharges the integration capacitors A and B and measures the charge stored therein, thereby obtaining a measurement of the current produced by the photodiode 302 and therefore obtaining a measurement of illumination at the photodiode 302 within the selected band of optical wavelengths. A Reset switch 316 may be used to clear out the integration in preparation for the next imaging frame time period.

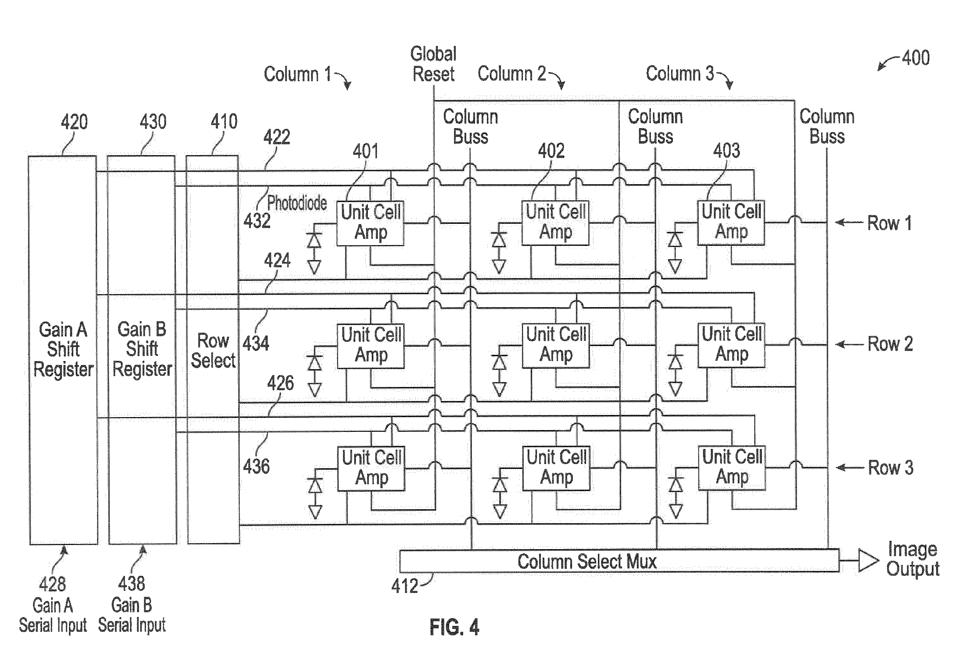

Figure 4 shows an illustrative circuit for a focal plane array 400 suitable for gain adjustment related to charge capacitance of a selected pixel. The illustrative focal plane array 400 includes a 3x3 array of pixels arranged in three rows (row 1, row2, row3) and three columns (column 1, column 2, column 3). The focal plane array shown to include three rows and three columns is shown for illustrative purposes only. Other focal plane arrays may include any number of rows and columns. The pixels in a selected row (e.g., pixels 401, 402 and 403 in row 1) are all illuminated by light within a selected band of optical wavelength. Also, received light intensity at a selected row (e.g., row 1) varies from received light intensity at the other rows (e.g., row 2, row 3). A Row Select multiplexer 410 and a Column Select multiplexer 412 may select a pixel in order to obtain intensity measurements at the pixel.

Gain A shift register 420 includes data lines (422, 424, 426) for each of row 1, row 2 and row 3, respectively. A selected line (e.g., line 422) for a selected row is coupled to each Capacitor A in the pixels of the selected row (e.g. row 1) and provides the Gain Select A signal bit (e.g. '0' or '1') to connect or disconnect each Capacitor A in pixels of the selected row. Similarly, Gain B shift register 430 includes data lines (432, 434, 436) for each of row1, row 2 and row 3, respectively. A selected line (e.g., line 432) for a selected row (e.g., row 1) is coupled to each Capacitor B in the pixels of the selected row and provides the Gain Select B signal that connects or disconnects each Capacitor B in pixels of the selected row. The desired gains for each row are selected by shifting a pattern of 1s and 0s into the shift registers 420 and 430 via their respective serial inputs 428 and 438.

Using one or more of Gain A shift register 420 and Gain B shift register 430, the gain for a selected row of pixels (such as row 1) may be adjusted so that each pixel in the row has the same gain. Additionally, each row of cells may be switched independently. Thus, all of the pixels (401, 402, 403) in row 1 may have the same gain and may be adjusted to have the same gain value. However, the gain for row 1 may be adjusted independently of the gains of row 2 and row 3.

The gains in the pixels of a selected row can thus be selected to be related to capacitances of Capacitor A, Capacitor B, or Capacitors A and B. Adding additional capacitors into the pixels of the focal plane array, as well as additional shift registers to correspond to the additional capacitors, may increase the number of gain values available to the pixel. It is not necessary that the capacitors of a pixel be of equal capacitance. Using capacitors that have different capacitances allows an operator a greater variety of possible total capacitances, thereby increases a variety of gain values attainable in the pixel.

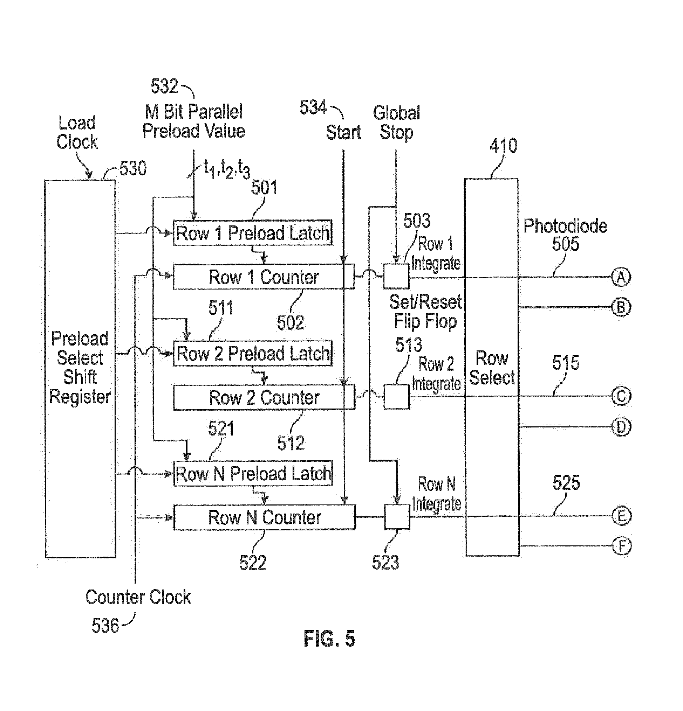

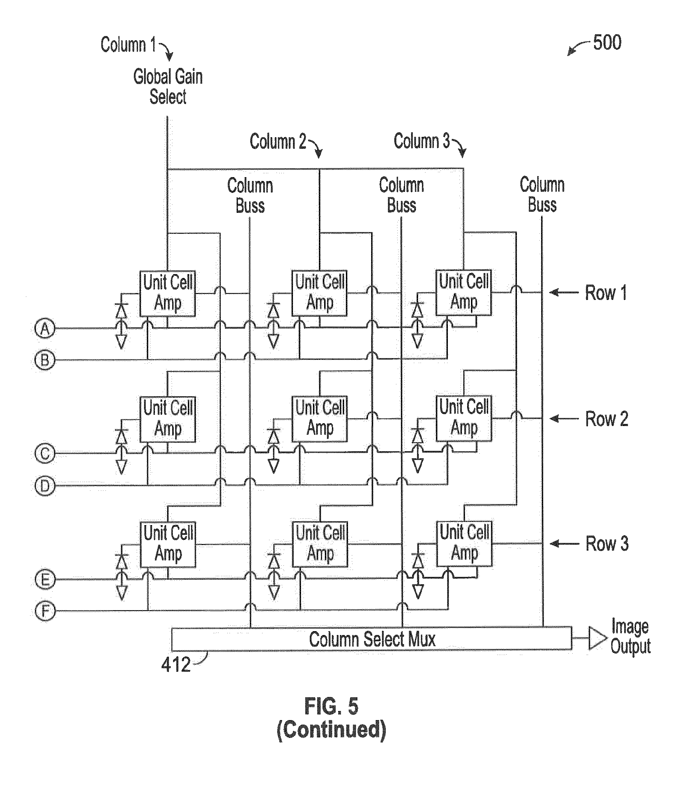

Figure 5 shows an illustrative circuit for a focal plane array 500 suitable for gain adjustment related to integration time of a selected pixel. For each row of the focal plane array 500, there is a counter, a preset latch and a set/rest flip-flop. Row 1 includes counter 501, preset latch 502 and set/reset flip-flop 503. Row 2 includes counter 511, preset latch 512 and set/reset flip-flop 513. Row 3 includes counter 521, preset latch 522 and set/reset flip-flop 523.

A preload shift register 530 sequentially enables each of the preset latches 502, 512 and 522. A set of values (t₁, t₂, t₃) is provided by an M-bit parallel preload unit 532. The preload select shift register 530 is synchronized with the M-bit parallel preload unit 532 to sequentially load value t₁ into preset latch 502, value t₂ into preset latch 512 and value t₃ into preset latch 522. The preset values (t₁, t₂, t₃) may represent a selected holdoff time, by which start of the integration time is delayed during the frame time for a selected row, thereby reducing the integration time to a fraction of the frame time. In general, preset values (t₁, t₂, t₃) are selected to relate to light intensities for the corresponding rows.

During the imaging operation, at the start of the global integration period, a START signal 534 preloads each counter (501, 511, 521) and enables the counter to start counting down cycles of a counter clock 536 from a time value related to the assigned preload values (t₁, t₂, t₃) in the preset latches (502, 512 and 522) to zero. At the same time a HIGH flip-flop output signal is sent along lines (505, 515, 525) to close the reset switch (316, Figure 3) at the pixels. Once a counter (e.g. counter 501) reaches zero, the output of the counter resets the flip-flop (e.g., flip-flop 503), which opens the related reset switch (316, Figure 3) to begin measuring current in its integration circuit. At the end of the frame time, a GLOBAL STOP signal causes the sampling device (314, Figure 3) to sample the pixel voltage, and then rest the flip-flop switch (316, Figure 3) to HIGH which sends a signal along the selected line (e.g. line 505) to reset the related integration capacitors (306 and 308, Figure 3). Thus, the integration time for a selected row may be set independently of the integration time for the other rows. The resolution of the integration time may be determined by the number of bits provided in the values t₁, t₂ and t₃. Thus, the more bits used to define these values, the finer the time resolution of the resulting measurement.

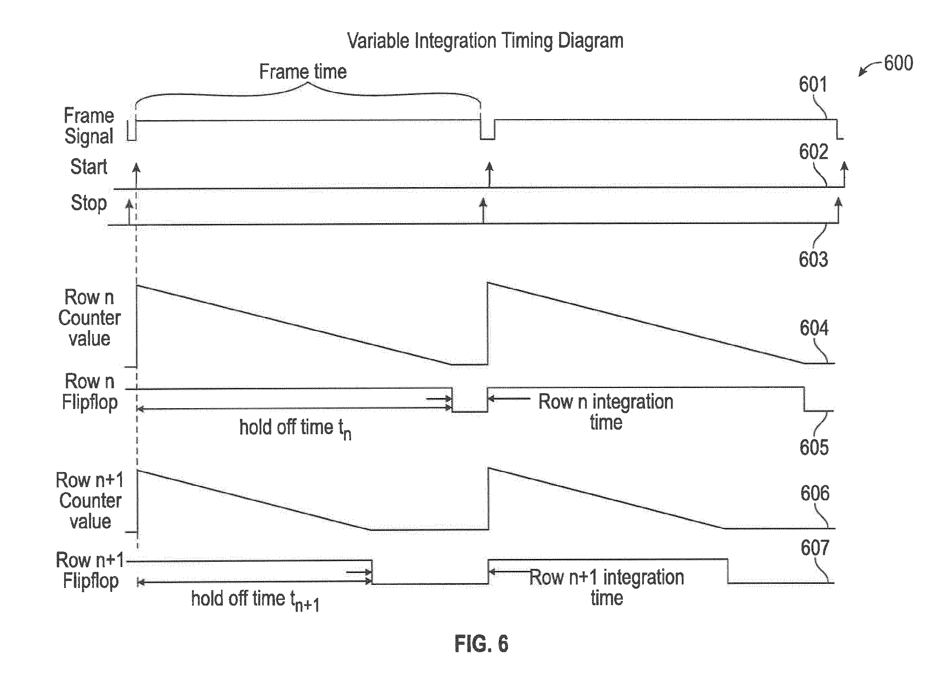

Figure 6 show a variable integration timing diagram 600 that may be used with respect to the circuit of Figure 5. Line 601 shows a frame time signal for a focal plane array. The frame time signal flips from a LOW value during which frame time is inactive to a HIGH value during which the frame time is active. The frame times of line 601 may be activated using the START signal of line 602 and deactivated using the STOP signal of line 603. Lines 604 and 605 show a counter value and a flip-flop signal for an n^{th} row of the focal plane array. At the beginning of the frame time, the n^{th} counter counts down from its assigned value tₙ to zero. Once the n^{th} counter reaches zero, the flip-flop switches of the n^{th} row activate integration for the duration of the 'row n integration time', which ends with the STOP signal of line 603. Similarly, lines 606 and 607 show a counter value and flip-flop signal for an (n+1)^{th} row of the focal plane array. The value *t*_{*n*+1} is shorter than the value *tₙ.* Therefore, the integration time for the pixels of row (n+1) is longer than the integration time for the pixels of row n.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention as defined by the claims. The embodiment was chosen and described in order to best explain the principles of the invention and the practical application, and to enable others of ordinary skill in the art to understand the invention for various embodiments with various modifications as are suited to the particular use contemplated.

While the preferred embodiment to the invention had been described, it will be understood that those skilled in the art, both now and in the future, may make various improvements and enhancements which fall within the scope of the claims which follow.

## Claims

1. A method of imaging an object or scene, comprising:
projecting dispersed light from the object or scene onto a two-dimensional focal plane array having a plurality of rows of pixels;
adjusting a gain parameter of a selected row of pixels independently of the gain parameter of another row of pixels; and
obtaining a measurement of light directed onto a pixel in the selected row of pixels using the adjusted gain parameter.

2. The method of claim 1, further comprising imaging the object or scene onto a slit and spectrally dispersing the light passing through the slit for projecting onto the two-dimensional focal plane array

3. The method of claim 2, further comprising adjusting the gain parameter of the selected row to correspond to an expected light intensity received within a selected band of optical wavelengths.

4. The method of claim 1, wherein pixels in a same column of the focal plane array receives light from the same point on an object or scene at different optical wavelengths.

5. The method of claim 1, wherein adjusting the gain parameter further comprises adjusting a total capacitance of a circuit of the pixel for each pixel in the selected row.

6. The method of claim 5, wherein adjusting the total capacitance further comprises using at least one shift register to select a number of capacitors coupled to an integration circuit of the pixel.

7. The method of claim 1, wherein adjusting the gain parameter further comprises adjusting a measurement time of a sampling device of the pixel for each pixel in the selected row.

8. The method of claim 1, wherein adjusting the measurement time further comprises reducing a measurement time for high light intensity values and increasing a measurement time for low light intensity values.

9. An imaging device, comprising:
a two-dimensional focal plane (120) including a plurality of rows (r) of pixels, wherein a pixel is configured to measure an intensity of light directed onto the pixel using a gain parameter; and
a gain adjuster (420, 430) configured to adjust the gain parameter for a selected row of pixels of the focal plane array independently of the gain parameter of another row of pixels.

10. The imaging device of claim 9, wherein the row of pixels of the focal plane array receives light within a selected band of optical wavelengths.

11. The imaging device of claim 10, wherein the gain adjuster allows the gain parameter of the selected row to be set to correspond to an expected light intensity received within the selected band.

12. The imaging device of claim 9, wherein pixels in a same column of the focal plane array receive light at different optical wavelengths.

13. The imaging device of claim 9, wherein the gain adjuster is further configured to adjust a total capacitance of a circuit of the pixel for each pixel in the selected row.

14. The imaging device of claim 13, wherein the gain adjuster comprises at least one shift register configured to select a number of capacitors coupled to an integration circuit of the pixel.

15. The imaging device of claim 9, wherein that gain adjuster is further configured to adjust a measurement time of a sampling device of the pixel for each pixel in the selected row.
